# EUROPEAN PATENT APPLICATION

(11) **EP 3 909 713 A1**
(43) Date of publication of application: **17.11.2021**
(21) Application number: 20763259.7
(22) Date of filing: 08.01.2020
(51) Int. Cl.: B23K 9/23, B21D 22/20, B21D 24/04, B23K 9/073

(54) **METHOD FOR JOINING PLATED STEEL PLATES, AND JOINED STRUCTURE**

(30) Priority: 25.02.2019 JP 2019031781
(71) Applicant: KABUSHIKI KAISHA KOBE SEIKO SHO (KOBE STEEL, LTD.), Hyogo 651-8585 (JP)
(72) Inventor: SUZUKI Reiichi, Kanagawa 251-8551 (JP)
(74) Representative: Müller-Boré & Partner Patentanwälte PartG mbB
(86) International application number: PCT/JP2020/000361
(87) International publication number: WO 2020/174883

(57) **Abstract**

Provided is a method for joining plated steel plates where, when overlaying and welding a plurality of steel plates in which at least one steel plate is a plated steel plate, a satisfactory joined structure with no gas pocket defects can be obtained by providing a gap which can reliably emit gas produced at welded sections while suppressing deterioration in welding quality and deviations in product dimensions. A method for joining plated steel plates, comprising: a step for forming a plurality of protruding strip parts (12), which are substantially perpendicular to an edge section (11) of a first steel plate (10) and are arranged along the edge section (11), on a surface of the first steel plate (10) that is overlaid on a second steel plate (20); a step for overlaying the first steel plate (10) and the second steel plate (20) such that the protruding parts (12) protrude in a direction towards the overlay surface with the second steel plate (20); and a step for linearly arc-welding the edge section (11) of the first steel plate (10).

## Description

### Technical Field

The present invention relates to a method for joining a plated steel sheet and a joint structure.

### Background Art

In a case where steel sheets, a surface of at least one of which has been galvanized for the purpose of corrosion protection (galvanized steel sheet), are overlapped and arc-welded linearly, when arc heat is applied to the overlapping surfaces of the steel sheets, the plated zinc may gasify when the temperature of the zinc exceeds its boiling point. In this case, when the steel sheets are in close contact with each other, there is no space for the zinc gas to escape, so the zinc gas enters the molten pool that is liquid iron, and pore defects called blowholes, pits, or pinholes occur. Since pore defects reduce joining strength, pore defects are a major factor in reducing the strength of welds in ultra-high-tensile strength steels and are considered a problem.

There are two major common technologies for reducing pores during the welding of galvanized steel sheets. The first technology is a method of optimizing a current or voltage waveform, shielding gas composition, and welding wire composition, and for example, a solid wire for welding galvanized steel sheet and a gas shielded arc welding method using the same, in which the content of each element contained in the solid wire is controlled to a predetermined amount and an Ar gas containing a predetermined amount of CO2 gas is used as a shielding gas, are common as in Patent Literature 1. However, the effectiveness in reducing pore defects, obtained by this technology, is limited, and further improvement is needed when applying it to ultra-high-tensile strength steels.

The second technology is a method of preventing occurrence of pore defects by actively providing a way for zinc gas to escape in the pretreatment step prior to welding and allowing the zinc gas to escape through the way. The number of studied cases of applying the method to laser welding is larger than the number of studied cases of applying the method to arc welding. The main factor for this is considered to be the fact that the degree of flexibility in adjusting the welding conditions is smaller in laser welding than in arc welding. Specifically, the following methods are exemplified: (A) grooves are formed by press working; (B) fine grooves are formed by knurling a steel sheet; and (C) strain deformation is caused in the pretreatment laser welding step. However, since laser welding is basically performed by penetration welding, it cannot be applied to fillet welding for edge portion, which is performed by arc welding, or even if it could be applied, the effect would be small.

As for the method of forming fine grooves by knurling in the above (B), it is difficult to form grooves in ultra-high-tensile strength steels by knurling, and the cost is very high. In addition, heat input in arc welding is high, and as for the fine grooves such as those formed by knurling, the gap closes due to thermal deformation during the welding, making it difficult to smoothly discharge a large amount of zinc gas generated by the high heat input.

As for the method of causing strain deformation by laser in the above (C), if the main welding in the subsequent process is also laser welding, the same equipment can be used, which brings certain merits, but if the main welding is arc welding, a separate expensive investment in equipment is required, resulting in high costs. In addition, a gap continued to a sheet edge portion or a large gap cannot be ensured by thermal deformation by laser heating, making it difficult to smoothly discharge a large amount of zinc gas.

In order to deal with such problems, the lap arc welding method described in Patent Literature 2 has been proposed. In Patent Literature 2, when each of base metals is pressed, a convex part is formed in at least one of the base metals to form a gap around the weld, and then arc welding is performed. As a result, vaporized coated low-boiling-point material is allowed to diffuse and escape from gap in the periphery of the weld to the outside, and the vaporized low-boiling-point material is prevented from remaining in the weld and good lap arc welding can be performed.

### Citation List

### Patent Literature

Patent Literature 1: JP 5787798 B2
Patent Literature 2: JP H06-41025 B2

### Summary of Invention

### Technical Problem

However, in Patent Literature 2, since the convex part is formed such that the convex part extends in a direction parallel to the weld line (in other words, the side edge portion of the flange portion of the galvanized steel sheet) (see FIG. 1 of Patent Literature 2), when the sheet assembly is constrained using clamps or the like for welding, the gap between the sheet assembly tends to vary. As a result, the gap becomes unstable, causing deterioration of welding quality. In addition, springback occurred when the clamps are released after the completion of welding causes variations in product dimensions.

The present invention was made in consideration of the above problems, and an object thereof is to provide: a method for joining a plated steel sheet by which a good joint structure without pore defects can be obtained by forming a gap that allows a gas generated in the weld to be reliably discharged, while avoiding deterioration of welding quality and variation in product dimensions when a plurality of steel sheets, at least one of which is a plated steel sheet, are overlapped with each other and welded; and a joint structure.

### Solution to Problem

The above object of the present invention can be achieved by the following subject matter (1) directed to a method for joining a plated steel sheet.

(1) A method for joining a plated steel sheet, in which at least one of a first steel sheet and a second steel sheet is a plated steel sheet and the first and second steel sheets overlapped with each other are subjected to an arc welding,
the method comprising:
a step of forming a plurality of protrusions that is substantially perpendicular to an edge portion of the first steel sheet and is positioned along the edge portion in an overlapping surface of the first steel sheet, the overlapping surface being to be overlapped with the second steel sheet;
a step of overlapping the first steel sheet and the second steel sheet such that the protrusions protrude in a direction toward an overlapping surface of the second steel sheet; and
a step of performing the arc welding linearly in the edge portion of the first steel sheet or the edge portion of the second steel sheet.

Preferable embodiments of the present invention for the method for joining a plated steel sheet relates to the following (2) to (10).
(2) The method for joining a plated steel sheet according to the above (1), wherein in the forming step, the plurality of protrusions is formed simultaneously with press working of the first steel sheet to form a desired shape.
(3) The method for joining a plated steel sheet according to the above (1) or (2), wherein in the overlapping step, gaps are formed between the plurality of protrusions, and a distance between the first steel sheet and the second steel sheet in the gaps is substantially constant.
(4) The method for joining a plated steel sheet according to the above (2), wherein the protrusion is a lock bead provided during the press working.
(5) The method for joining a plated steel sheet according to any one of the above (1) to (4), wherein the protrusion has a height of 0.2 mm to 1.0 mm.
(6) The method for joining a plated steel sheet according to any one of the above (1) to (5), wherein the plated steel sheet is a galvanized steel sheet having a tensile strength of 980 MPa or more.
(7) The method for joining a plated steel sheet according to any one of the above (1) to (6), wherein the first steel sheet is a steel sheet for hot stamping.
(8) The method for joining a plated steel sheet according to the above (2) or (4), wherein the press working is hot stamping.
(9) The method for joining a plated steel sheet according to any one of the above (1) to (8), wherein in the arc welding step, a shielding gas is a mixed gas containing an Ar gas in an amount of 80 vol% or less with the remainder being a CO2 gas, or 100 vol% CO2 gas.
(10) The method for joining a plated steel sheet according to any one of the above (1) to (9), wherein in the arc welding step, a welding wire is supplied by positive and negative feeding control, and is transferred to a molten pool by using a surface tension of a droplet when a short circuit occurs.

In addition, the above object of the present invention can be achieved by the following subject matter (11) directed to a joint structure.

(11) A joint structure in which at least one of a first steel sheet and a second steel sheet is a plated steel sheet and the first and second steel sheets overlapped with each other are arc-welded,
wherein a plurality of protrusions that is substantially perpendicular to an edge portion of the first steel sheet and is positioned along the edge portion is formed in an overlapping surface of the first steel sheet, the overlapping surface being overlapped with the second steel sheet,
the first steel sheet and the second steel sheet are overlapped such that the protrusions protrude in a direction toward an overlapping surface of the second steel sheet, and
a linear weld bead is formed in the edge portion of the first steel sheet or the edge portion of the second steel sheet.

### Advantageous Effects of Invention

According to the method for joining a plated steel sheet and joint structure in the present invention, it is possible to obtain a good joint structure without pore defects by forming a gap that allows a gas generated in the weld to be reliably discharged while avoiding deterioration of welding quality and variation in product dimensions.

### Brief Description of Drawings

[FIG. 1] FIG. 1 is a perspective view schematically illustrating a method for joining a plated steel sheet in the first embodiment of the present invention.
[FIG. 2] FIG. 2 is an A-A sectional view of FIG. 1.
[FIG. 3] FIG. 3 is a B-B sectional view of FIG. 1.
[FIG. 4] FIG. 4 is a perspective view schematically illustrating a method for joining a plated steel sheet in the second embodiment of the present invention.
[FIG. 5] FIG. 5 is a perspective view schematically illustrating a method for joining a plated steel sheet in the third embodiment of the present invention.
[FIG. 6] FIG. 6 is a perspective view schematically illustrating a method for joining a plated steel sheet in the fourth embodiment of the present invention.
[FIG. 7] FIG. 7 is a C-C sectional view of FIG. 6.

### Description of Embodiments

A method for joining a plated steel sheet in each embodiment of the present invention and a joint structure formed by the joining method are described in detail below with reference to the drawings.

### <First Embodiment

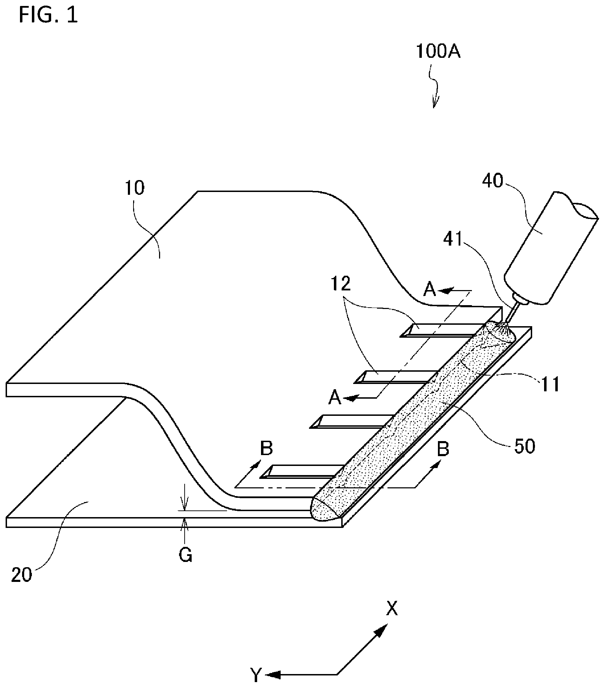

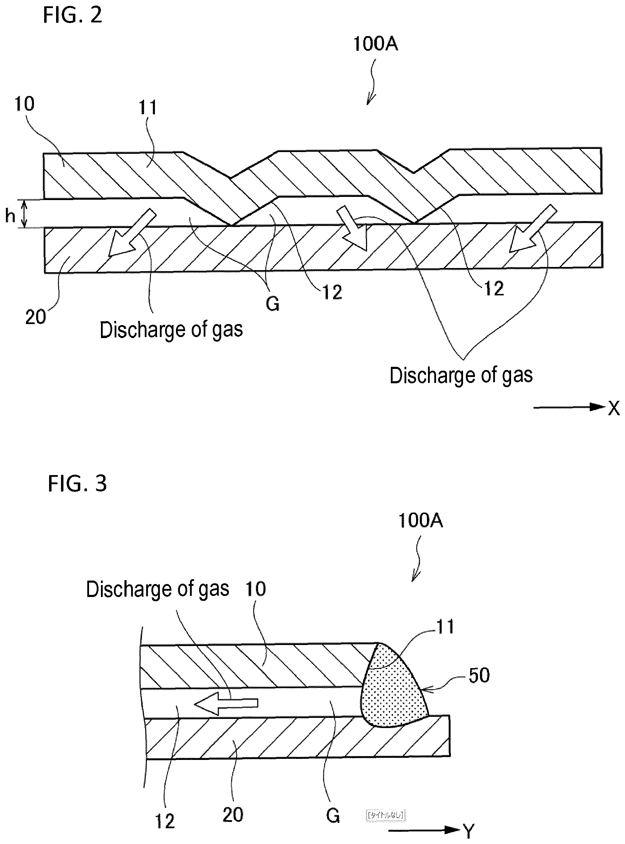

FIG. 1 is a perspective view schematically illustrating a method for joining a plated steel sheet in the first embodiment of the present invention. FIG. 2 is an A-A sectional view of FIG. 1, and FIG. 3 is a B-B sectional view of FIG. 1.

As illustrated in FIG. 1 to FIG. 3, a joint structure 100A is formed by arc welding (e.g. MAG welding) a first steel sheet 10 and a second steel sheet 20, which are overlapped with each other, linearly along an edge portion (i.e. side edge portion) 11 of the first steel sheet 10 by a welding torch 40. At least one of the first steel sheet 10 and the second steel sheet 20 is a galvanized steel sheet obtained by galvanizing. Examples of the galvanized steel sheet include a hot-dip galvannealed steel sheet (GA), a hot-dip galvanized steel sheet (GI), an electrogalvanized sheet steel (EG), and the like. The tensile strength (TS) of a galvanized steel sheet is not particularly limited, and for example, the galvanized steel sheet is a high tensile strength steel (HTSS) having a tensile strength of 980 MPa or more, preferably 1180 MPa or more.

The galvanized steel sheet may be a single-sided plated steel sheet, or a double-sided plated steel sheet formed by dipping (immersing) a steel sheet in a treatment bath. In this embodiment, the galvanizing is applied to at least one of a surface of the first steel sheet 10 which faces the second steel sheet 20, and a surface of the second steel sheet 20 which faces the first steel sheet 10.

A plurality of protrusions 12 that extends in a direction substantially perpendicular to the edge portion 11 of the first steel sheet 10 (hereinafter referred to as the "Y direction") and is positioned in a direction along the edge portion 11 (hereinafter referred to as the "X direction") is formed in the first steel sheet 10. The protrusions 12 are formed in a substantially V-shape that protrudes in a direction toward the overlapping surface of the second steel sheet 20 (downward in FIG. 1 to FIG. 3). In this embodiment, the protrusions 12 are formed simultaneously with press working of the first steel sheet 10 to form a desired shape depending on its application.

In this way, the protrusions 12 are formed simultaneously with the forming working (press working) of the first steel sheet 10 before a welding step of overlapping and welding the first steel sheet 10 and the second steel sheet 20. Therefore, a special working step (dedicated step) for forming the protrusions 12 is not required, which improves production efficiency and reduces manufacturing costs.

The protrusions 12 have a substantially V-shape in the first embodiment, but the shape is not particularly limited as long as the protrusions 12 protrude in a direction toward the overlapping surface of the second steel sheet 20. For example, a U-shape may also be employed.

The timing of forming the protrusions 12 may be when a blank material is punched out from the first steel sheet 10 or when the blank material is pressed into a product shape, and is not particularly limited. Thus, a special step for forming the protrusions 12 is not required, which can improve production efficiency and reduce working costs.

The protrusion 12 may be replaced with a lock bead formed by a protruding portion (lock bead forming portion) provided in a mold (not illustrated) in order to prevent the flow-in of a metal material during the press working.

The first steel sheet 10 may be a steel sheet for hot stamping, and in this case, the press working can be warm forming working or hot forming working (hot stamping). Thus, the protrusions 12 can be easily formed by the press working even if the first steel sheet 10 is a high tensile strength steel.

The joint structure 100A is formed by overlapping the first steel sheet 10 and the second steel sheet 20 with each other, and performing arc welding linearly along the edge portion 11 of the first steel sheet 10 to weld the first steel sheet 10 and the second steel sheet 20 by forming a linear weld metal (weld bead) 50 in a weld.

Next, a joining method for the joint structure 100A is described.

First, as illustrated in FIG. 1 and FIG. 2, the first steel sheet 10, in which a plurality of protrusions 12 that extends in a direction (Y direction) substantially perpendicular to the edge portion 11, is positioned in a direction (X direction) along the edge portion 11, and is in a substantially V-shape has been formed by press working, is overlapped with the second steel sheet 20. At that time, the first steel sheet 10 is overlapped with the second steel sheet 20 such that the plurality of protrusions 12 in the first steel sheet 10 protrudes toward the second steel sheet 20.

Then, a welding torch 40 is moved along the edge portion 11 of the first steel sheet 10, and the welding wire (filler wire or filler rod) 41, which is a consumable electrode, is fed from the welding torch 40, and an arc is generated between the welding torch 40 and the first steel sheet 10 and the second steel sheet 20 while flowing a shielding gas, to perform arc welding linearly along the edge portion 11 of the first steel sheet 10. The first steel sheet 10 and the second steel sheet 20 are thus joined. Thus, a linear weld metal 50 is formed along the edge portion 11 between the edge portion 11 of the first steel sheet 10 and the second steel sheet 20, as illustrated in FIG. 3.

In this embodiment, a plurality of protrusions 12 in the first steel sheet 10, which extends in a direction (Y direction) substantially perpendicular to the edge portion 11 of the first steel sheet 10, is formed in a direction (X direction) along the edge portion 11. The plurality of protrusions 12 protrudes in the direction toward the overlapping surface of the second steel sheet 20, and the first steel sheet 10 and the second steel sheet 20 are overlapped with each other via the plurality of protrusions 12.

Here, in a case where the sheet assembly is constrained by clamps or the like during the welding, since a plurality of protrusions 12 that extends in the direction (Y direction) substantially perpendicular to the edge portion 11 of the first steel sheet 10 is formed, the strength against deformation of the sheet assembly (especially the first steel sheet 10 with the formed protrusions 12) during the clamping is improved. In addition, the gap can be controlled such that parallel spacing as a lap joint can be stably maintained, and the accuracy of the component shape after welding is improved. Therefore, deterioration of welding quality and variation in product dimensions can be prevented.

As the shielding gas, a mixed gas containing an Ar gas in an amount of 80 vol% or less with the remainder being a CO₂ gas, or 100 vol% CO₂ gas is preferred. The CO₂ gas has an effect of throttling an arc and is suitable for the welding for a joint having a large thickness, which requires a penetration depth.

In the welding of a galvanized steel sheet, when the galvanized steel sheet is heated by arc welding, zinc having a boiling point of about 900°C may evaporate and enter a molten pool, and pore defects such as blowholes, pits, or pinholes may occur in a weld.

However, in the joining method in this embodiment, a gap G formed between the plurality of protrusions 12 of the first steel sheet 10 serves as a gas releasing hole, so that a generated zinc gas is discharged in the Y direction from the gap G, and occurrence of the pore defects can be prevented. Since the protrusions 12 are formed by press working, the gap G having a size sufficient to allow a zinc gas to be discharged can be ensured between the first steel sheet 10 and the second steel sheet 20.

The size of the gap G is not limited as long as the generated zinc gas can be sufficiently discharged. In order to obtain the effect of this embodiment, the height h (see FIG. 2) of the protrusions 12 is preferably 0.2 mm to 1.0 mm. In the case where the height h of the protrusions 12 is less than 0.2 mm as in general knurling, the gap G may be easily closed due to thermal deformation during the welding, and the discharge of the zinc gas may be insufficient. In the case where the height h of the protrusions 12 exceeds 1.0 mm, the gap G between the first steel sheet 10 and the second steel sheet 20 may become large and the joining strength may decrease.

The tip of the protrusion 12 (i.e., the top of the substantially V-shape) in the first steel sheet 10 is a singular point where the gap with the second steel sheet 20 is zero, but since there is a space for the gas to escape in the direction (X direction) perpendicular to the longitudinal direction (Y direction) of the protrusion 12 and the length of the top of the substantially V-shape is extremely short, pore defects are not formed.

The welding wire 41 is preferably supplied by positive and negative feeding control. Droplets are transferred to the molten pool by using the surface tension of the droplets when a short circuit occurs, and the heat input to the first steel sheet 10 and the second steel sheet 20 can be reduced, and the amount of evaporation of zinc can be reduced.

In the method for joining a plated steel sheet in this embodiment, welding is performed linearly while supplying the welding wire 41. Therefore, as illustrated in FIG. 3, in the edge portion 11 of the first steel sheet 10, the gap G formed between the protrusions 12 adjacent to each other is filled with the weld metal 50. Thus, the joining strength between the first steel sheet 10 and the second steel sheet 20 can be sufficiently ensured.

In the case of a galvanized steel sheet using a high tensile strength steel, a grain boundary embrittlement crack called liquid metal embrittlement crack (LME crack) is likely to occur in a resistance spot welding during which very high pressure is applied. However, in the joining method based on arc welding in this embodiment, the LME crack does not occur in principle since the pressing force is extremely small, and occurrence of pore defects can also be prevented. Rapid solidification is not performed unlike the resistance spot welding, so that excessive hardness in heat-affected zone is not exhibited, and the sensitivity to delayed cracking due to hydrogen can also be reduced.

As described above, in the first steel sheet 10, by forming a plurality of substantially V-shaped protrusions 12 that extends in a direction substantially perpendicular to the edge portion 11, is positioned along the edge portion 11 and protrudes downward (i.e., in a direction toward the overlapping surface of the second steel sheet 20), a gap G large enough to allow a zinc gas to be discharged is formed by the plurality of protrusions 12 between the protrusions 12 between the first steel sheet 10 and the second steel sheet 20, and the zinc gas is discharged from the gap G to prevent pore defects from occurring in the weld.

### <Second Embodiment

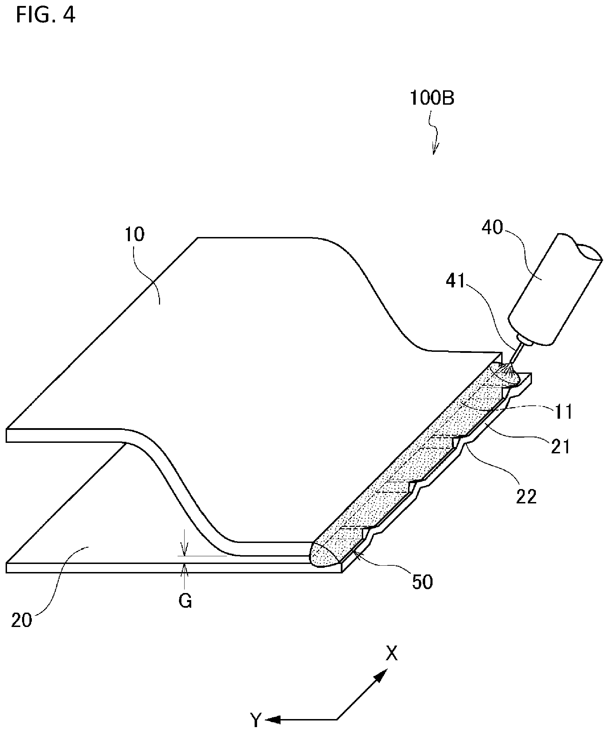

FIG. 4 is a perspective view schematically illustrating a method for joining a plated steel sheet in the second embodiment of the present invention.

In the joint structure 100B in this embodiment, a plurality of protrusions 22 that extends in a direction (Y-direction) substantially perpendicular to an edge portion 21 of the second steel sheet 20 and is positioned along the edge portion 21 (X-direction) is formed in the second steel sheet 20 overlapped with the first steel sheet 10. The protrusions 22 are formed in a substantially inverted V-shape that protrudes in a direction toward the overlapping surface of the first steel sheet 10 (upward in FIG. 4). The protrusions 12 are formed by press working the second steel sheet 20.

The joint structure 100B is formed by overlapping the first steel sheet 10 and the second steel sheet 20 in a state where the protrusions 22 of the second steel sheet 20 are in contact with the first steel sheet 10, and performing arc welding linearly along the edge portion 11 of the first steel sheet 10 to weld the first steel sheet 10 and the second steel sheet 20 by forming a linear weld metal (weld bead) 50 in a weld.

By forming substantially inverted V-shaped protrusions 22 that protrude upward toward the first steel sheet 10 in the second steel sheet 20, a gap G is formed between the protrusions 22 between the first steel sheet 10 and the second steel sheet 20 when the first steel sheet 10 is overlapped with the second steel sheet 20. This gap G is the same as the height h of the protrusion 22 (see FIG. 2) and is 0.2 mm to 1.0 mm.

The other parts are the same as those of the joint structure 100A in the first embodiment, and the joining method thereof is also the same.

Thanks to these, a zinc gas generated during the arc welding of the first steel sheet 10 and the second steel sheet 20 is discharged in the Y direction through the gap G formed between the protrusions 22 adjacent to each other, and occurrence of pore defects in the weld is prevented. Also in this embodiment, as in the first embodiment, in a case where the sheet assembly is constrained by clamps or the like during the welding, since a plurality of protrusions 22 that extends in a direction (Y direction) substantially perpendicular to the edge portion 21 of the second steel sheet 20 is formed, the strength against deformation of the sheet assembly (especially the second steel sheet 20 with the formed protrusions 22) during the clamping is improved. In addition, the gap can be controlled such that parallel spacing as a lap joint can be stably maintained, and the accuracy of the component shape after welding is improved. Therefore, deterioration of welding quality and variation in product dimensions can be prevented.

### <Third Embodiment

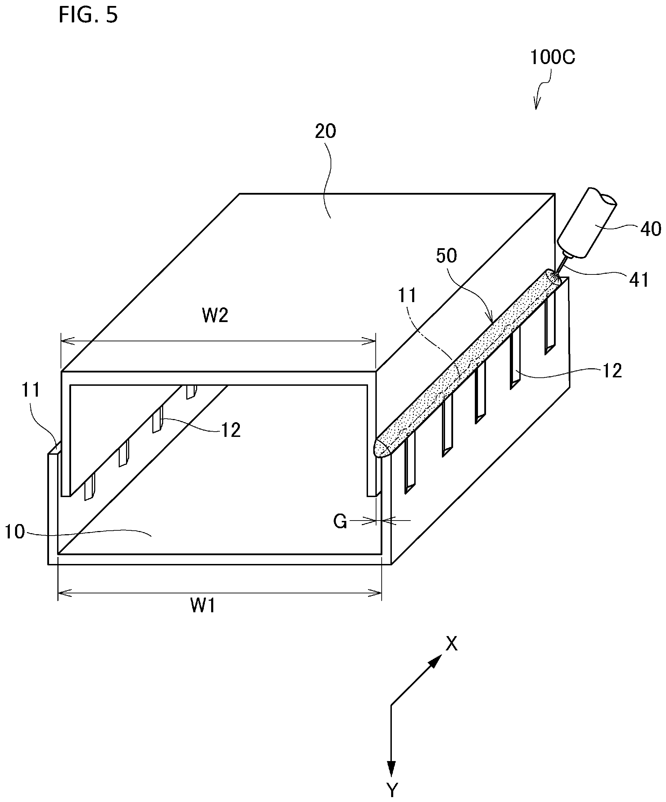

FIG. 5 is a perspective view schematically illustrating a method for joining a plated steel sheet in the third embodiment of the present invention.

In the joint structure 100C in this embodiment, the first steel sheet 10 and the second steel sheet 20 are each formed in a substantially U-shape in cross section. The inner width W1 of the opening of the first steel sheet 10 is slightly larger than the outer width W2 of the opening of the second steel sheet 20, and the first steel sheet 10 and the second steel sheet 20 are assembled such that the respective openings face each other. Then, the first steel sheet 10 and the second steel sheet 20 are joined by performing arc welding along the edge portion 11 of the first steel sheet 10 to form a linear weld metal (weld bead) 50 in a weld.

A plurality of protrusions 12 that extends in a direction (Y direction) substantially perpendicular to the edge portion 11 of the first steel sheet 10 and is positioned along the edge portion 11 (X direction), is formed in the opening of the first steel sheet 10. The protrusions 12 have a substantially V-shape in cross section and protrude in a direction toward the overlapping surface of the second steel sheet 20, and are formed simultaneously with press working of the first steel sheet 10 to form a substantially U-shape in cross section.

Also in this embodiment, by forming substantially V-shaped protrusions 22 that protrude toward the second steel sheet 20 in the first steel sheet 10, a gap G is formed between the protrusions 22 adjacent to each other between the first steel sheet 10 and the second steel sheet 20 when the first steel sheet 10 is overlapped with the second steel sheet 20. This gap G is the same as the height h of the protrusion 22 (see FIG. 2) and is 0.2 mm to 1.0 mm.

The other parts are the same as those of the joint structure 100A in the first embodiment, and the joining method thereof is also the same.

Thanks to these, a zinc gas generated during the arc welding of the first steel sheet 10 and the second steel sheet 20 is discharged in the Y direction through the gap G formed between the protrusions 22 adjacent to each other, and occurrence of pore defects in the weld is prevented. Also in this embodiment, as in the first embodiment and second embodiment, when the sheet assembly is constrained by clamps or the like during the welding, since a plurality of protrusion 12 that extends in the direction (Y direction) substantially perpendicular to the edge portion 11 of the first steel sheet 10 is formed, the strength against deformation of the sheet assembly (especially the first steel sheet 10 with the formed protrusions 12) during the clamping is improved. In addition, the gap can be controlled such that parallel spacing as a lap joint can be stably maintained, and the accuracy of the component shape after welding is improved. Therefore, deterioration of welding quality and variation in product dimensions can be prevented.

### <Fourth Embodiment

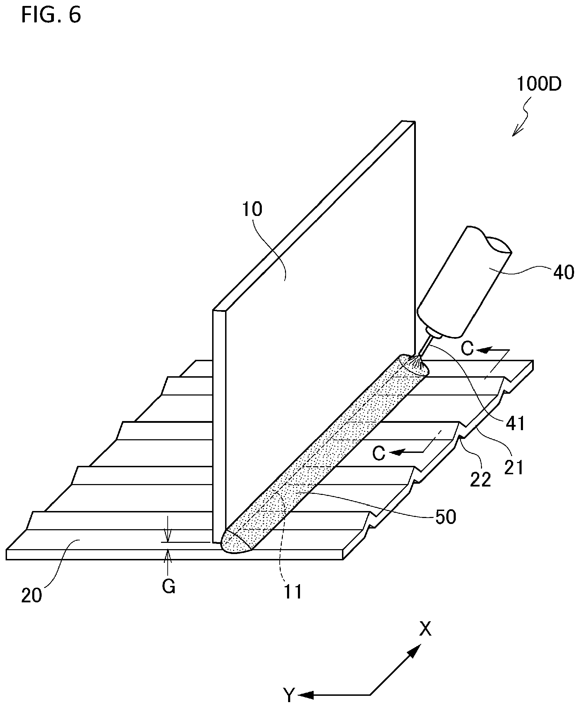

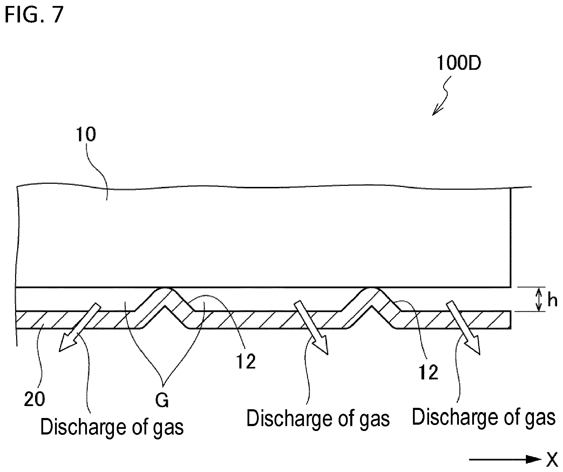

FIG. 6 is a perspective view schematically illustrating a method for joining a plated steel sheet in the fourth embodiment of the present invention. In addition, FIG. 7 is a C-C sectional view of FIG. 6.

In the joint structure 100D in this embodiment, a plurality of protrusions 22 that extends in a direction (Y-direction) substantially perpendicular to an edge portion 21 of the second steel sheet 20 and is positioned along the edge portion 21 (X-direction) is formed in the second steel sheet 20 with which the first steel sheet 10 is overlapped in a direction perpendicular to the first steel sheet 10. The protrusions 22 are formed in a substantially inverted V-shape that protrudes in a direction toward the overlapping surface of the first steel sheet 10 (upward in FIG. 6). The protrusions 12 are formed by press working the second steel sheet 20.

The joint structure 100D is formed by overlapping the first steel sheet 10 and the second steel sheet 20 in a state where the protrusions 22 of the second steel sheet 20 are in contact with the edge portion of the first steel sheet 10, and performing arc welding linearly along the edge portion 11 of the first steel sheet 10 (in this embodiment, the fillet between the first steel sheet 10 and the second steel sheet 20) to weld the first steel sheet 10 and the second steel sheet 20 by forming a linear weld metal (weld bead) 50 in a weld.

By forming substantially inverted V-shaped protrusions 22 that protrude upward toward the first steel sheet 10 in the second steel sheet 20, a gap G is formed between the protrusions 22 between the first steel sheet 10 and the second steel sheet 20 when the first steel sheet 10 is overlapped with the second steel sheet 20. This gap G is the same as the height h of the protrusion 22 (see FIG. 7), and is 0.2 mm to 1.0 mm.

The other parts are the same as those of the joint structure 100A in the first embodiment, and the joining method thereof is also the same.

Thanks to these, a zinc gas generated during the arc welding of the first steel sheet 10 and the second steel sheet 20 is discharged in the Y direction through the gap G formed between the protrusions 22 adjacent to each other, and occurrence of pore defects in the weld is prevented. Also in this embodiment, as in the first to third embodiments, when the sheet assembly is constrained by clamps or the like during the welding, since a plurality of protrusions 22 that extends in the direction (Y direction) substantially perpendicular to the edge portion 21 of the second steel sheet 20 is formed, the strength against deformation of the sheet assembly (especially the second steel sheet 20 with the formed protrusions 22) during the clamping is improved. In addition, the gap can be controlled such that parallel spacing as a lap joint can be stably maintained, and the accuracy of the component shape after welding is improved. Therefore, deterioration of welding quality and variation in product dimensions can be prevented.

The present invention is not limited to each of the above embodiments, and appropriate deformation, improvement or the like can be made.

As described above, the present description discloses the followings.

(1) A method for joining a plated steel sheet, in which at least one of a first steel sheet and a second steel sheet is a plated steel sheet and the first and second steel sheets overlapped with each other are subjected to an arc welding,
the method comprising:
a step of forming a plurality of protrusions that is substantially perpendicular to an edge portion of the first steel sheet and is positioned along the edge portion in an overlapping surface of the first steel sheet, the overlapping surface being to be overlapped with the second steel sheet;
a step of overlapping the first steel sheet and the second steel sheet such that the protrusions protrude in a direction toward an overlapping surface of the second steel sheet; and
a step of performing the arc welding linearly in the edge portion of the first steel sheet or the edge portion of the second steel sheet.

According to this configuration, when the sheet assembly is constrained by a clamp or the like during the welding, since a plurality of protrusion that extends in a direction substantially perpendicular to the edge portion of the first steel sheet or edge portion of the second steel sheet is formed, the strength against deformation of the sheet assembly during the clamping is improved, and the gap can be controlled such that parallel spacing as a lap joint can be stably maintained, and the accuracy of the component shape after welding is improved. Therefore, deterioration of welding quality and variation in product dimensions can be prevented. In addition, a gas generated by heating the plated steel sheet by arc welding can be discharged from the gap formed by the protrusions of the first steel sheet, and the occurrence of pore defects can be prevented.

(2) The method for joining a plated steel sheet according to the above (1), wherein in the forming step, the plurality of protrusions is formed simultaneously with press working of the first steel sheet to form a desired shape.

According to this configuration, the need for a special working process to form the protrusions can be eliminated, production efficiency can be improved, and working costs can be reduced.

(3) The method for joining a plated steel sheet according to the above (1) or (2), wherein in the overlapping step, gaps are formed between the plurality of protrusions, and a distance between the first steel sheet and the second steel sheet in the gaps is substantially constant.

According to this configuration, when arc welding is performed, a zinc gas can be discharged through the gap defined by the protrusion and the top surface of the second steel sheet, and occurrence of pore defects in a weld can be prevented. In addition, stable welding quality can be obtained.

(4) The method for joining a plated steel sheet according to the above (2), wherein the protrusion is a lock bead provided during the press working.

According to this configuration, the need for a special working process to form the protrusions can be eliminated, production efficiency can be improved, and working costs can be reduced.

(5) The method for joining a plated steel sheet according to any one of the above (1) to (4), wherein the protrusion has a height of 0.2 mm to 1.0 mm.

According to this configuration, the gas generated during the welding can be reliably discharged without degrading the joining strength and assembly accuracy.

(6) The method for joining a plated steel sheet according to any one of the above (1) to (5), wherein the plated steel sheet is a galvanized steel sheet having a tensile strength of 980 MPa or more.

According to this configuration, arc welding of a galvanized steel sheet, which is a high tensile strength steel, is possible.

(7) The method for joining a plated steel sheet according to any one of the above (1) to (6), wherein the first steel sheet is a steel sheet for hot stamping.

According to this configuration, arc welding of a high tensile strength steel is possible.

(8) The method for joining a plated steel sheet according to the above (2) or (4), wherein the press working is hot stamping.

According to this configuration, the protrusions can be easily formed by the press working even if the first steel sheet is a high tensile strength steel.

(9) The method for joining a plated steel sheet according to any one of the above (1) to (8), wherein in the arc welding step, a shielding gas is a mixed gas containing an Ar gas in an amount of 80 vol% or less with the remainder being a CO2 gas, or 100 vol% CO2 gas.

According to this configuration, the arc can be throttled by the CO2 gas, and the welding with a large penetration depth can be performed.

(10) The method for joining a plated steel sheet according to the above (1) to (9), wherein in the arc welding step, a welding wire is supplied by positive and negative feeding control, and is transferred to a molten pool by using a surface tension of a droplet when a short circuit occurs.

According to this configuration, droplets are transferred to the molten pool by using the surface tension of the droplets when a short circuit occurs, and the heat input to the first and second steel sheets can be reduced, and the amount of evaporation of zinc can be reduced.

(11) A joint structure in which at least one of a first steel sheet and a second steel sheet is a plated steel sheet and the first and second steel sheets overlapped with each other are arc-welded,
wherein a plurality of protrusions that is substantially perpendicular to an edge portion of the first steel sheet and is positioned along the edge portion is formed in an overlapping surface of the first steel sheet, the overlapping surface being overlapped with the second steel sheet,
the first steel sheet and the second steel sheet are overlapped such that the protrusions protrude in a direction toward an overlapping surface of the second steel sheet, and
a linear weld bead is formed in the edge portion of the first steel sheet or the edge portion of the second steel sheet.

According to this configuration, a joint structure having no pore defects, and having excellent joining strength and high assembly accuracy after welding can be obtained.

Although each of the embodiments is described above with reference to the drawings, it is needless to say that the present invention is not limited to such embodiments. It will be apparent to those skilled in the art that various changes or modifications may be conceived within the scope of the claims. It is also understood that the various changes or modifications belong to the technical scope of the present invention. Each of constituent elements in the embodiments described above may be combined freely within a range not departing from the spirit of the present invention.

This application is based on Japanese Patent Application No. 2019-031781 filed on February 25, 2019, the contents of which are incorporated herein by reference.

### Reference Signs Lists

- 10: First steel sheet
- 11, 21: Edge portion
- 12, 22: Protrusion
- 20: Second steel sheet
- 40: Welding torch
- 41: Welding wire
- 50: Weld metal (weld bead)
- 100A, 100B, 100C: Joint structure
- G: Gap
- h: Height of protrusion
- W1: Inner width of opening of first steel sheet
- W2: Outer width of opening of second steel sheet

## Claims

1. A method for joining a plated steel sheet, in which at least one of a first steel sheet and a second steel sheet is a plated steel sheet and the first and second steel sheets overlapped with each other are subjected to an arc welding,
the method comprising:
a step of forming a plurality of protrusions that is substantially perpendicular to an edge portion of the first steel sheet and is positioned along the edge portion in an overlapping surface of the first steel sheet, the overlapping surface being to be overlapped with the second steel sheet;
a step of overlapping the first steel sheet and the second steel sheet such that the protrusions protrude in a direction toward an overlapping surface of the second steel sheet; and
a step of performing the arc welding linearly in the edge portion of the first steel sheet or the edge portion of the second steel sheet.

2. The method for joining a plated steel sheet according to claim 1, wherein in the forming step, the plurality of protrusions is formed simultaneously with press working of the first steel sheet to form a desired shape.

3. The method for joining a plated steel sheet according to claim 1 or 2, wherein in the overlapping step, gaps are formed between the plurality of protrusions, and a distance between the first steel sheet and the second steel sheet in the gaps is substantially constant.

4. The method for joining a plated steel sheet according to claim 2, wherein the protrusion is a lock bead provided during the press working.

5. The method for joining a plated steel sheet according to claim 1 or 2, wherein the protrusion has a height of 0.2 mm to 1.0 mm.

6. The method for joining a plated steel sheet according to claim 1 or 2, wherein the plated steel sheet is a galvanized steel sheet having a tensile strength of 980 MPa or more.

7. The method for joining a plated steel sheet according to claim 1 or 2, wherein the first steel sheet is a steel sheet for hot stamping.

8. The method for joining a plated steel sheet according to claim 2 or 4, wherein the press working is hot stamping.

9. The method for joining a plated steel sheet according to claim 1 or 2, wherein in the arc welding step, a shielding gas is a mixed gas containing an Ar gas in an amount of 80 vol% or less with the remainder being a CO₂ gas, or 100 vol% CO₂ gas.

10. The method for joining a plated steel sheet according to claim 1 or 2, wherein in the arc welding step, a welding wire is supplied by positive and negative feeding control, and is transferred to a molten pool by using a surface tension of a droplet when a short circuit occurs.

11. A joint structure in which at least one of a first steel sheet and a second steel sheet is a plated steel sheet and the first and second steel sheets overlapped with each other are arc-welded,
wherein a plurality of protrusions that is substantially perpendicular to an edge portion of the first steel sheet and is positioned along the edge portion is formed in an overlapping surface of the first steel sheet, the overlapping surface being overlapped with the second steel sheet,
the first steel sheet and the second steel sheet are overlapped such that the protrusions protrude in a direction toward an overlapping surface of the second steel sheet, and
a linear weld bead is formed in the edge portion of the first steel sheet or the edge portion of the second steel sheet.
